Europäisches Patentamt

European Patent Office

Office européen des brevets

(19)

(11) Veröffentlichungsnummer : **0 103 754**
B1

(12) **EUROPÄISCHE PATENTSCHRIFT**

(45) Veröffentlichungstag der Patentschrift :
28.05.86

(21) Anmeldenummer : **83108153.4**

(22) Anmeldetag : **18.08.83**

(51) Int. Cl.⁴ : **B 29 B   7/00**, B 29 B 17/00

(54) **Verfahren zum Verdichten von thermoplastischem Kunststoffmaterial.**

(30) Priorität : **23.08.82 DE 3231237**

(43) Veröffentlichungstag der Anmeldung :
**28.03.84 Patentblatt 84/13**

(45) Bekanntmachung des Hinweises auf die Patenterteilung : **28.05.86 Patentblatt 86/22**

(84) Benannte Vertragsstaaten :
**DE FR GB IT**

(56) Entgegenhaltungen :
**DE-A- 1 454 738**
**DE-A- 2 432 345**
**DE-A- 2 432 861**
**DE-B- 1 679 834**
**DE-B- 2 156 198**

(73) Patentinhaber : **Dr. Herfeld GmbH & Co.KG**
**Mühlendorf 11**
**D-5982 Neuenrade (DE)**

(72) Erfinder : **Herfeld, Friedrich W., Dr.**
**Postfach 2247**
**D-5982 Neuenrade (DE)**

(74) Vertreter : **Tetzner, Volkmar, Dr.-Ing. Dr. Jur.**
**Van-Gogh-Strasse 3**
**D-8000 München 71 (DE)**

## Beschreibung

Die Erfindung betrifft ein Verfahren zum Mischen, Erwärmen, Verdichten und anschließenden Kühlen von thermoplastischem Kunststoffmaterial (beispielsweise von leichten Kunststoffolien, Fasern, Hohlkörpern und Kunststoffabfällen aller Art, die verdichtet und agglomeriert bzw. granuliert werden sollen).

Verfahren der vorstehend genannten Art sind beispielsweise durch die DE-B-1 679 834 und die DE-A-2 432 861 bekannt. Die Einleitung der zum Verdichten und Agglomerieren des Kunststoffmateriales benötigten Reibungswärme in das Gut erfolgt hierbei durch ein rotierendes Zerkleinerungswerkzeug. Dabei wird das Kunststoffmaterial sehr ungleichmäßig erhitzt, wobei es insbesondere im Arbeitsbereich des Zerkleinerungswerkzeuges vielfach zu lokalen Überhitzungen des Kunststoffmateriales kommt. Der Schmelzpunkt des thermoplastischen Kunststoffmateriales wird dabei nicht selten in einzelnen Zonen des Zerkleinerungs- und Verdichtungsraumes überschritten.

Bedingt durch diese sehr ungleichmäßige Materialerhitzung und die gelegentliche Überschreitung der Schmelztemperatur ergibt sich bei den bekannten Verfahren häufig ein wenig homogenes Produkt von schlechter Rieselfähigkeit und mit einer innerhalb eines breiten Spektrums liegenden Kornverteilung.

Der Erfindung liegt daher die Aufgabe zugrunde, unter Vermeidung dieser Nachteile ein Verfahren der eingangs genannten Art zu entwickeln, das es ermöglicht, mit einfachen anlagentechnischen Mitteln ein besonders gleichmäßig verdichtetes, gut rieselfähiges Produkt zu erzeugen, dessen Kornspektrum nur eine geringe Bandbreite aufweist.

Diese Aufgabe wird erfindungsgemäß dadurch gelöst, daß dem Kunststoffmaterial nach Erreichen einer innerhalb des Verdichtungsbereiches liegenden Materialtemperatur Wasser in fein verteilter Form derart zugeführt wird, daß die Temperatur des gesamten Materiales während des ganzen Verdichtungsvorganges innerhalb eines vorgegebenen Temperaturbereiches unterhalb der Schmelztemperatur gehalten wird.

Bei den bisher bekannten Verfahren erfolgt eine Kühlung des Kunststoffmateriales durch Wassereinspritzung erst nach vollständiger Beendigung der Verdichtung des Materiales (d. h. zu dem Zweck, das verdichtete Material von der Verdichtungstemperatur auf Endtemperatur abzukühlen). Bei dem erfindungsgemäßen Verfahren erfolgt demgegenüber die Wasserzuführung bereits während der Verdichtung des Materiales, und zwar zu dem Zweck, die Temperatur des gesamten Kunststoffmateriales während des ganzen Verdichtungsvorganges innerhalb eines verhältnismäßig engen Temperaturbereiches unterhalb der Schmelztemperatur zu halten. Durch diese dosierte Kühlung wird zwar der Verdichtungsvorgang bei dem erfindungsgemäßen Verfahren zeitlich etwas verlängert; auf der anderen Seite werden jedoch lokale Überhitzungen des Materiales, insbesondere ein Erreichen oder gar Überschreiten der Schmelztemperatur in einzelnen Zonen, mit Sicherheit vermieden. Die einheitliche Temperaturführung des gesamten Kunststoffmateriales führt zu einem gleichmäßig verdichteten und auch in seinen sonstigen Eigenschaften sehr homogen Produkt, das eine gute Rieselfähigkeit besitzt und dessen Kornspektrum eine enge Bandbreite aufweist.

Da bei dem erfindungsgemäßen Verfahren die Temperaturführung während des Verdichtungsvorganges nicht durch die lokale Materialerwärmung aufgrund des Misch-, Zerkleinerungs- und Verdichtungsvorganges, sondern im wesentlichen durch die dosierte Wasserzuführung bestimmt wird, läßt sich das erfindungsgemäße Verfahren den unterschiedlichsten thermoplastischen Kunststoffmaterialien optimal anpassen. Die feinfühlige Temperatursteuerung des Verdichtungsprozesses wird bei dem erfindungsgemäßen Verfahren dadurch begünstigt, daß das zugeführte Wasser die Wärmeleitung vom Kunststoffmaterial zu einem für die Temperatursteuerung verwendeten Temperaturfühler verbessert und damit eine nahezu verzögerungsfreie Überwachung der Materialtemperatur durch den Temperaturfühler bewirkt.

Gemäß einer zweckmäßigen Ausgestaltung der Erfindung wird jeweils nach Erreichen einer vorgegebenen Materialtemperatur eine bestimmte Wassermenge in das Kunststoffmaterial eingespritzt. Dies erfolgt zweckmäßig in der Weise, daß jeweils nach Erreichen der vorgegebenen Materialtemperatur Wasser während eines kurzen Zeitintervalles, vorzugsweise von 0,5 bis 5 s, in das Kunststoffmaterial eingespritzt wird. Diese Wassereinspritzung erfolgt um so kürzer und häufiger, je kleiner der vorgegebene Temperaturbereich ist, innerhalb dessen die Materialtemperatur während des Verdichtungsvorganges gehalten werden soll. Bei Wahl genügend kurzer Einspritzintervalle zeichnet sich dieses Verfahren durch besonders geringe Schwankungen der Materialtemperatur während des Verdichtungsvorganges aus. Die Änderungen der Temperatur des Kunststoffmateriales während des Verdichtungsvorganges durch intervallweise Wasserzuführung werden erfindungsgemäß — je nach Art des thermoplastischen Kunststoffmateriales — innerhalb eines Bereiches von weniger als 10 °C, vorzugsweise von weniger als 5 °C, gehalten.

Bei einer anderen Ausgestaltung des erfindungsgemäßen Verfahrens wird jeweils nach Erreichen einer vorgegebenen oberen Materialtemperatur so lange Wasser in das Kunststoffmaterial eingespritzt, bis eine vorgegebene untere Materialtemperatur erreicht ist. Bei einem solchen Verfahren wird durch geeignete Anordnung der Temperaturfühler zweckmäßig für ein möglichst verzögerungsfreies Ansprechen der Temperaturfühler auf die Materialtemperatur gesorgt.

Um das Wasser in möglichst fein verteilter Form in das Kunststoffmaterial einzuführen, kann es erfindungsgemäß in einem Luftstrom verteilt und mittels dieses Luftstromes in das Material eingedüst werden. Zweckmäßig erfolgt hierbei die Einführung des Wassers in den Materialbereich höchster Erwärmung. Wird insbesondere ein mit Flügeln versehenes, rotierendes Mischwerkzeug verwendet, so wird das Wasser zweckmäßig im Arbeitsbereich der Flügelenden zugeführt. Dies kann entweder durch die von den Flügeln des Mischwerkzeuges bestrichene Wand des Mischbehälters oder durch die rotierenden Flügel selbst erfolgen.

Zweckmäßigerweise wird das Kunststoffmaterial vor des Verdichtung vorzerkleinert.

Die Erfindung wird im folgenden anhand eines in der Zeichnung erläuterten Ausführungsbeispieles erläutert. Es zeigen

Figur 1 eine Mischvorrichtung zur Durchführung des erfindungsgemäßen Verfahrens ;

Figur 2 ein Diagramm der Materialtemperatur in Abhängigkeit von der Zeit.

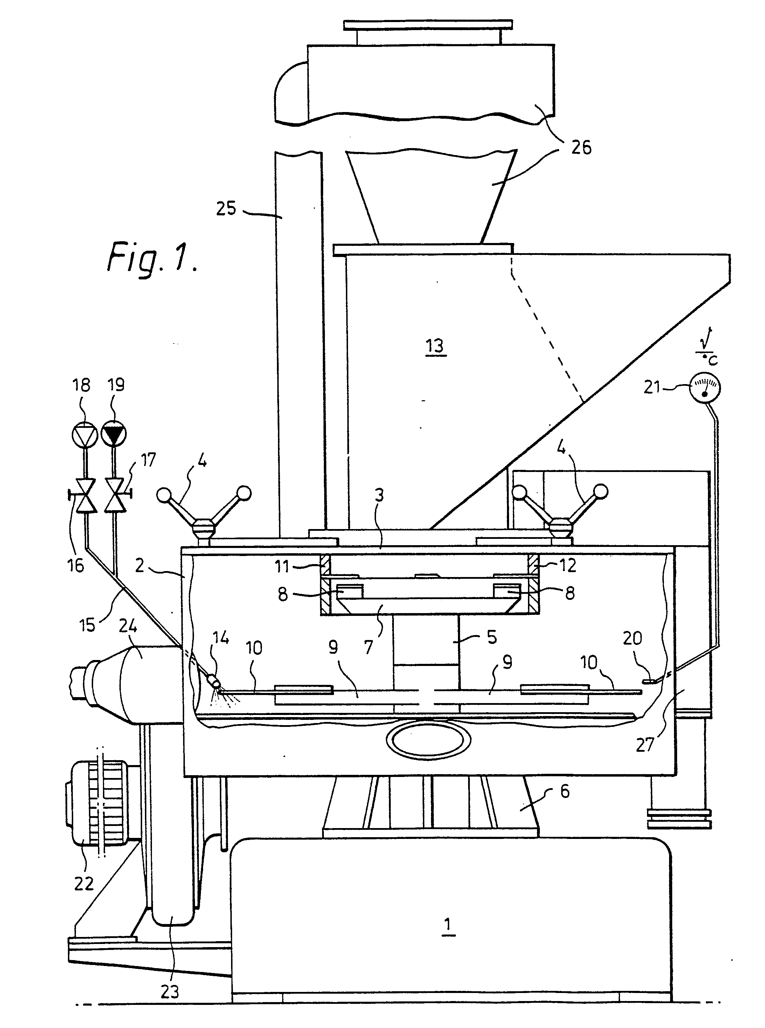

Die in Fig. 1 in einer teilweise geschnittenen Vertikalansicht dargestellte Vorrichtung zur Durchführung des erfindungsgemäßen Verfahrens enthält auf einem Ständer 1 einen Verdichterbehälter 2, der nach oben durch einen Deckel 3 abgeschlossen ist, der durch Spannelemente 4 angezogen wird.

Durch den Boden des Verdichterbehälters 2 greift eine Rotorwelle 5 hindurch, die von einem im Ständer 1 untergebrachten Antriebsmotor angetrieben wird. Die Rotorwelle ist durch eine Lagerung 6 hindurchgeführt, über die sich der Verdichterbehälter 2 auf dem Ständer 1 abstützt.

Die Rotorwelle 5 trägt an ihrem oberen Ende einen Vorzerkleinerungsteller 7 mit im Umfangsbereich aufgesetzten Rotormessern 8. Im unteren Bereich der Rotorwelle 5 sind verhältnismäßig dicht über dem Boden des Verdichterbehälters 2 Verdichterflügel 9 vorgesehen, die an ihrem Umfang Aufsatzmesser 10 tragen.

Der mit den Rotormessern 8 besetzte Vorzerkleinerungsteller 7 ist von einem am Deckel 3 befestigten ringförmigen Stator 11 umgeben, der an seinem inneren Umfang dicht über den Rotormessern 8 Statormesser 12 trägt.

Über dem Deckel 3 befindet sich ein Materialaufgabetrichter 13, über den bei geöffnetem Deckel 3 Material in den Verdichterbehälter 2 eingefüllt werden kann.

Im Innenraum des Verdichterbehälters 2 befindet sich — nahe der Bewegungsbahn der Aufsatzmesser 10 — eine Sprühdüse 14, die über eine Leitung 15 und Ventile 16, 17 mit einer Druckluftquelle 18 und einem Wasseranschluß 19 in Verbindung steht.

Weiterhin ist im Innenraum des Verdichterbehälters 2 nahe dem Bodenbereich ein Wärmefühler 20 angeordnet, der an ein Thermometer 21 bzw. an eine (nicht veranschaulichte) Steuereinrichtung angeschlossen ist.

Zur Zuführung von Kühlluft dient ein durch einen Motor 22 angetriebenes Kühlluftgebläse 23, das über einen Kühlluftzuführstutzen 24 mit dem Innenraum des Verdichterbehälters 2 in Verbindung steht.

Die Abführung der Kühlluft aus dem Verdichterbehälter 2 erfolgt über eine Leitung 25 und einen Staubabscheider 26. Das im Staubabscheider 26 abgeschiedene Material fällt in den Materialaufgabetrichter 13 zurück.

Eine Hubvorrichtung 27 dient schließlich zum mechanischen Heben des Deckels 2 zum Reinigen des Verdichterbehälters 2.

Im Betrieb der Vorrichtung wird durch die Sprühdüse 14 — in Abhängigkeit von der durch den Wärmefühler 20 ermittelten Temperatur des zu verdichtenden thermoplastischen Kunststoffmateriales — Wasser dosiert in den Innenraum des Verdichterbehälters 2 eingespritzt. Die an den Wärmefühler 20 angeschlossene, die Wasserzufuhr steuernde Einrichtung dosiert hierbei die Wasserzufuhr derart, daß die Materialtemperatur während des Verdichtungsvorganges innerhalb eines gewünschten engen Bereiches gehalten wird.

Nach Beendigung des Verdichtungsvorganges wird die Anlage auf Kühlung umgeschaltet, wobei soviel und/oder solange Wasser bzw. Kühlluft zugeführt wird, bis das Produkt erhärtet und lagerfähig abgekühlt bzw. trocken ist.

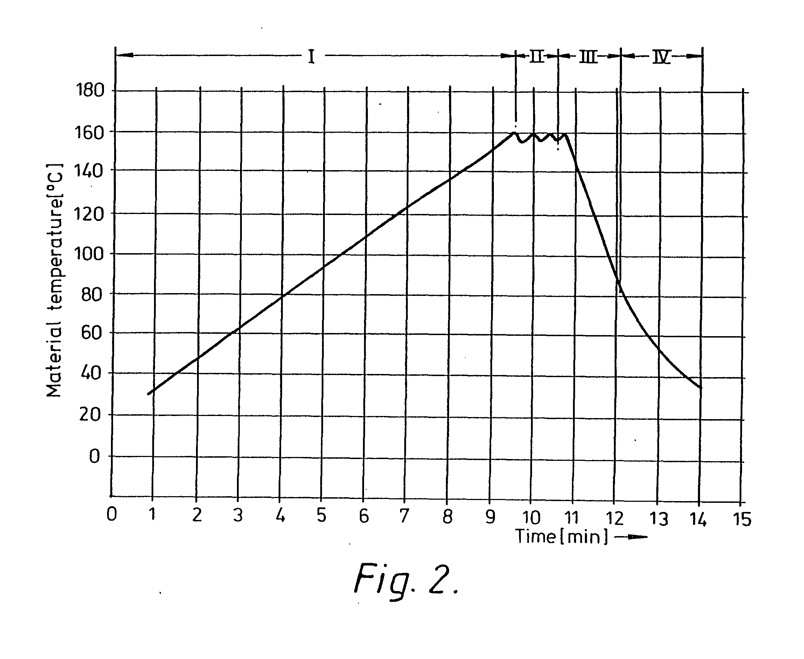

Fig. 2 zeigt ein typisches Zeit-Temperatur-Diagramm für das Mischen, Erwärmen, Verdichten und anschließende Kühlen von Polypropylen. In der Ordinate ist die Materialtemperatur (in °C) und in der Abszisse die Zeit (in min) aufgetragen.

In einer ersten Phase I wird das Kunststoffmaterial z. B. Polypropylen durch die rotierenden Flügel und Messer gemischt und durch die hierbei erzeugte Reibungswärme auf etwa 160 °C erwärmt. Nach Erreichen dieser Temperatur erfolgt in der Phase II ein intervallweises Wassereinspritzen, wobei durch jeden Einspritzvorgang (von etwa 0,5 bis 2 s Dauer) eine Temperaturabsenkung von etwa 5 °C eintritt. Während dieser Phase wird das Kunststoffmaterial gleichmäßig verdichtet. In einer anschließenden Phase III erfolgt sodann eine Kühlung und Granulation des verdichteten Materiales, in einer Phase IV schließlich der Auswurf des Gutes.

Bei der für das erfindungsgemäße Verfahren wesentlichen Wasserzuführung während der Verdichtungsphase II wird durch geeignete Dosierung des Kühlmediums gewährleistet, daß die durch das zugeführte Kühlmedium entzogene Wärmemenge die über die Mischwerkzeuge in der gleichen Zeit zugeführte Reibungswärme (unter Berücksichtigung der durch zunehmende Verdichtung gebundenen Schmelzwärme) etwa ausgleicht. Erwärmt sich beispielsweise eine Charge von 50 kg Polyäthylen in der Zeit zwischen zwei aufeinanderfolgenden Wassereinspritzungen durch Reibungswärme durchschnittlich um etwa 4 °C, so bedeutet dies (bei einer spezifischen Wärme von 0,45) eine Wärmezufuhr von 90 kcal. Um diese Wärmemenge abzuführen, werden jeweils 0,15 l Wasser eingespritzt. Dieses Wasser nimmt durch Erwärmung von 20 °C auf 100 °C zunächst 12 kcal auf ; weiterhin werden durch Verdampfung (bei 530 kcal Verdampfungswärme) noch 79,5 kcal abgeführt, insgesamt somit 91,5 kcal.

Um das Verfahren wirtschaftlich schnell ablaufen zu lassen, wird beispielsweise während 0,5 s Wasser eingespritzt, was innerhalb von 5 s eine Kühlung um jeweils ca. 5 °C bewirkt ; dann steigt die Materialtemperatur innerhalb weiterer 5 s wieder auf die ursprüngliche Verdichtungstemperatur an, worauf sich das Spiel wiederholt.

Die Zuführung des Kühlmediums beginnt jeweils nach Erreichen einer vorgewählten Temperatur, die beispielsweise bei LD-PE (Polyäthylen niedriger Dichte) bei 120 °C und bei PP (Polypropylen) bei 160 °C liegt. Die Temperatur wird je nach Schmelzpunkt und thermoplastischen Eigenschaften des jeweiligen Kunststoffmateriales unterschiedlich gewählt.

Bei dem erfindungsgemäßen Verfahren liegt das Kornspektrum des Fertigproduktes innerhalb enger Grenzen. Beispielsweise liegen 90 % der Gesamtmenge im Kornspektrum von 2 bis 5 mm Durchmesser und nur 10 % außerhalb, während bei den bekannten Verfahren — bedingt durch die eingangs erläuterte ungleichmäßige Verdichtung — im allgemeinen nur 30 bis 50 % der Gesamtmenge des Fertigproduktes in dem genannten Kornspektrum liegen.

## Patentansprüche

1. Verfahren zum Mischen, Erwärmen, Verdichten und anschließenden Kühlen von thermoplastischem Kunststoffmaterial in einem schnell laufenden Mischer, dadurch gekennzeichnet, daß dem Kunststoffmaterial nach Erreichen einer innerhalb des Verdichtungsbereiches liegenden Materialtemperatur Wasser in fein verteilter Form derart zugeführt wird, daß die Temperatur des gesamten Materiales während des ganzen Verdichtungsvorganges innerhalb eines vorgegebenen Temperaturbereiches unterhalb der Schmelztemperatur gehalten wird.

2. Verfahren nach Anspruch 1, dadurch gekennzeichnet, daß jeweils nach Erreichen einer vorgegebenen Materialtemperatur eine bestimmte Wassermenge in das Kunststoffmaterial eingespritzt wird.

3. Verfahren nach Anspruch 2, dadurch gekennzeichnet, daß jeweils nach Erreichen einer vorgegebenen Materialtemperatur Wasser während eines kurzen Zeitintervalles, vorzugsweise von 0,5 bis 5 s, in das Kunststoffmaterial eingespritzt wird.

4. Verfahren nach Anspruch 1, dadurch gekennzeichnet, daß die Änderungen der Temperatur des Kunststoffmateriales während des Verdichtungsvorganges durch intervallweise Wasserzuführung innerhalb eines Bereiches von weniger als 10 °C, vorzugsweise von weniger als 5 °C, gehalten werden.

5. Verfahren nach Anspruch 1, dadurch gekennzeichnet, daß jeweils nach Erreichen einer vorgegebenen oberen Materialtemperatur so lange Wasser in das Kunststoffmaterial eingespritzt wird, bis eine vorgegebene untere Materialtemperatur erreicht ist.

6. Verfahren nach Anspruch 1, dadurch gekennzeichnet, daß das Wasser in einem Luftstrom verteilt zugeführt wird.

7. Verfahren nach Anspruch 1, dadurch gekennzeichnet, daß das Wasser in den Materialbereich höchster Erwärmung eingeführt wird.

8. Verfahren nach Anspruch 7 unter Verwendung eines mit Flügeln versehenen, rotierenden Mischwerkzeuges, dadurch gekennzeichnet, daß das Wasser im Arbeitsbereich der Flügelenden zugeführt wird.

9. Verfahren nach Anspruch 1, dadurch gekennzeichnet, daß das Kunststoffmaterial vor der Verdichtung vorzerkleinert wird.

## Claims

1. Method of mixing, heating, compressing and then cooling thermoplastic synthetic material in a fast running mixer, characterised in that water is suplied in fine distribution to the synthetic material after a material temperature lying within the compression range has been reached so that the temperature of the whole material is kept within a predetermined temperature range below the melting temperature during the whole compression process.

2. Method as claimed in claim 1, characterised in that a specific quantity of water is injected into the synthetic material whenever a predetermined material temperature is reached.

3. Method as claimed in claim 2, characterised in that whenever the predetermined material temperature is reached water is injected into the synthetic material during a short interval of time, preferably from 0.5 to 5 s.

4. Method as claimed in claim 1, characterised in that the changes in the temperature of the synthetic material during the compression process resulting from the supply of water at intervals are kept within a range of less than 10 °C, preferably less than 5 °C.

5. Method as claimed in claim 1, characterised in that whenever a predetermined upper material temperature is reached water is injected into the synthetic material until a predetermined lower material temperature is reached.

6. Method as claimed in claim 1, characterised in that the water is supplied distributed in an air current.

7. Method as claimed in claim 1, characterised in that the water is introduced into the hottest region of the material.

8. Method as claimed in claim 7, using a rotating mixing tool provided with blades, characterised in that the water is supplied in the working region of the ends of the blades.

9. Method as claimed in claim 1, characterised in that the synthetic material is subjected to preliminary crushing before compression.

## Revendications

1. Procédé de mélange, de réchauffage, de densification puis de refroidissement de matière thermoplastique dans un mélangeur à marche rapide, caractérisé en ce que, lorsque la matière plastique a atteint une température comprise dans la plage de densification, de l'eau lui est additionnée sous forme finement distribuée de telle manière que la température de la totalité de la matière soit maintenue dans une plage prescrite de température qui est inférieure à la température de fusion pendant la totalité du processus de densification.

2. Procédé selon la revendication 1, caractérisé en ce que, lorsque la matière plastique a atteint une température prescrite, une quantité déterminée d'eau est projetée sur elle.

3. Procédé selon la revendication 2, caractérisé en ce que, à chaque fois que la matière plastique a atteint une température prescrite, de l'eau est projetée sur elle pendant un bref intervalle de temps qui est de préférence de 0,5 à 5 s.

4. Procédé selon la revendication 1, caractérisé en ce que les variations de la température de la matière plastique sont maintenues pendant le processus de densification à l'intérieur d'une plage inférieure à 10 °C, de préférence inférieure à 5 °C, par une admission d'eau à certains intervalles de temps.

5. Procédé selon la revendication 1, caractérisé en ce que, à chaque fois que la matière plastique a atteint une température supérieure prescrite, de l'eau est injectée dans cette matière jusqu'à ce que celle-ci ait atteint une température inférieure prescrite.

6. Procédé selon la revendication 1, caractérisé en ce que l'eau est introduite sous forme distribuée dans un courant d'air.

7. Procédé selon la revendication 1, caractérisé en ce que l'eau est introduite dans la région dans laquelle la matière subit le plus fort échauffement.

8. Procédé selon la revendication 7 mise en œuvre au moyen d'un outil mélangeur rotatif équipé de palettes, caractérisé en ce que l'eau est introduite dans la zone de travail de l'extrémité des palettes.

9. Procédé selon la revendication 1, caractérisé en ce que la matière plastique subit un fractionnement préalable à la densification.

**0 103 754**

Fig.1.

Fig. 2.